Europäisches Patentamt

European Patent Office

Office européen des brevets

(11) Publication number: 0 382 983
A1

# EUROPEAN PATENT APPLICATION

(21) Application number: 89400387.0

(51) Int. Cl.5: B01D 53/00

(22) Date of filing: 13.02.89

(43) Date of publication of application:
22.08.90 Bulletin 90/34

(84) Designated Contracting States:
FR

(71) Applicant: L'AIR LIQUIDE, SOCIETE ANONYME
POUR L'ETUDE ET L'EXPLOITATION DES
PROCEDES GEORGES CLAUDE
75, Quai d'Orsay
F-75321 Paris Cédex 07(FR)

(72) Inventor: Hirase, Ikuo
5-9-9 Tokodai Toyosato-machi
Tsucuba-gun 300-26(JP)

(74) Representative: Vesin, Jacques et al
L'AIR LIQUIDE, SOCIETE ANONYME POUR
L'ETUDE ET L'EXPLOITATION DES
PROCEDES GEORGES CLAUDE 75, quai
d'Orsay
F-75321 Paris Cédex 07(FR)

(54) Gas purge assembly.

(57) A gas purge assembly selectively connects a cylinder, a main line (24) for supplying a gas from the cylinder, a purging gas supply line (27), and a purging gas exhaust line (29). The gas purge assembly includes a joint assembly (11), a valve (13) connected between the joint assembly (11) and the purging gas supply line (27), and a 3 ports valve (12) for selectively connecting the joint assembly (11), the main line (24) and the purging gas exhaust line (29). The joint assembly (11) has a purging gas supply path for supplying a purging gas from the purging gas supply line (27) to a cylinder connection portion (14) and a purging gas exhaust path for supplying the purging gas in the cylinder connection portion (14) to the 3 ports valve (12).

F I G. 2

## Gas purge assembly

The present invention relates to a gas purge assembly and, more particularly, to an improved gas purge assembly for efficiently purging toxic or corrosive gases.

Inorganic halides such as $WF_6$, $MoF_6$, $TiC\ell_4$ and $BC\ell_3$, acidic compounds such as HF, $SO_2$ and $H_2S$, alkaline compounds such as $HN_3$, and inorganic hydrides such as $SiH_4$ and $PH_3$ are widely used as materials for thin film formation by, e.g., CVD in a semiconductor manufacturing process. These compounds have come to be used increasingly in recent years with the rapid development of the semiconductor industry.

The gases noted above are, however, toxic or corrosive and therefore must be purged from lines beforehand when, e.g., a cylinder is to be exchanged. Such gas purging has been conventionally performed as follows.

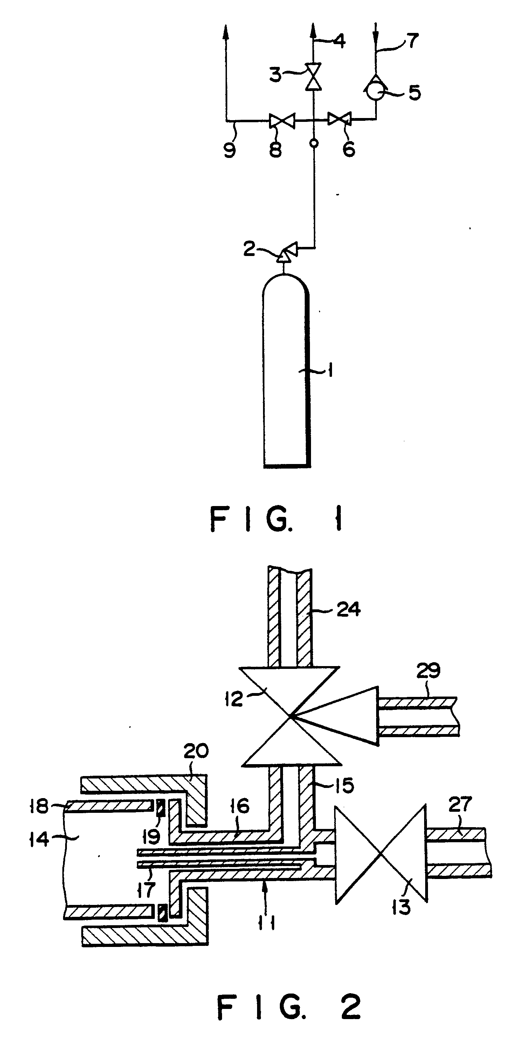

In Fig. 1, cylinder 1 is connected to main line 4 having valve 3 through L-shaped valve 2 mounted at its distal end. Line 4 is connected to line 7, having check valve 5 and valve 6, for supplying an inert gas such as nitrogen or argon as a purging gas and to line 9, having valve 8, for exhausting the purging gas. In such a line system, the gas in the lines is purged by opening valves 6 and 8 to flow the purging gas while valves 2 and 3 are kept closed.

In such a purge system, however, the distance between valve 2 and valves 3, 6 and 8 is very long and the line is contaminated with air when a cylinder is exchanged. There is also a dead space formed in the line. These problems make it more difficult to purge a gas or air in the line efficiently.

When air remains in the line, gases such as $WF_6$ and $MoF_6$ react quickly with water in the air and generate particles. These particles lead to a detrimental effect on fabrication of semiconductors, for example selectivity break down of selective metal deposition on a semiconductor substrate.

It is, therefore, an object of the present invention to provide a gas purge assembly capable of easily and efficiently purging air or gas in a line.

According to the present invention, there is provided a gas purge assembly for selectively connecting a cylinder, a main line for supplying a gas from the cylinder, a purging gas supply line, and a purging gas exhaust line, comprising a loint assembly, a valve connected between the joint assembly and the purging gas supply line, and a 3 ports valve for selectively connecting the joint assembly, the main line and the purging gas exhaust line, wherein the joint assembly has a purging gas supply path for supplying a purging gas from the purging gas supply line to a cylinder connection portion and a purging gas exhaust path for supplying the purging gas in the cylinder connection portion to the 3 ports valve.

In the gas purge assembly of the present invention, the joint assembly may have an outer pipe opened at one end thereof in the cylinder connection portion and having a 3 ports valve connection pipe communicating with a side portion near the other end thereof, and an inner pipe arranged coaxially with the outer pipe and having one end extending in the cylinder connection portion and the other end connected to the purging gas supply line through the valve. In such a gas purge assembly, one end of the inner pipe communicating with the purging gas supply line may extend to or in the cylinder connection portion, i.e., the one end of the inner pipe coincides with or projects longer than one end of the outer pipe. The length of the projecting portion is preferably 0 to 10 mm.

One end of the outer pipe can be flanged to be airtightly connected to a connection port of the valve mounted on the cylinder through a packing. In this case, by using a clamping metal piece, mounted on the connection port, for engaging at its end portion with the flanged outer pipe end portion, the one end of the outer pipe can be urged against the connection port.

According to the present invention, residual air in the line can be easily and efficiently purged without forming a dead space.

This invention can be more fully understood from the following detailed description when taken in conjunction with the accompanying drawings, in which:

Fig. 1 is a flowchart showing a conventional gas purge system;

Fig. 2 is a sectional view showing a gas purge assembly according to an embodiment of the present invention;

Fig. 3 is a flowchart showing a gas purge system adopting the gas purge assembly shown in Fig. 3;

Fig. 4 is a flowchart showing a vacuum pump used in the gas purge system shown in Fig. 3 and comprising a pressure gauge with a contact; and

Fig. 5 is a flowchart showing a gas purge assembly which is of form of a 4 port valve.

An embodiment of the present invention will be described below with reference to the accompanying drawings.

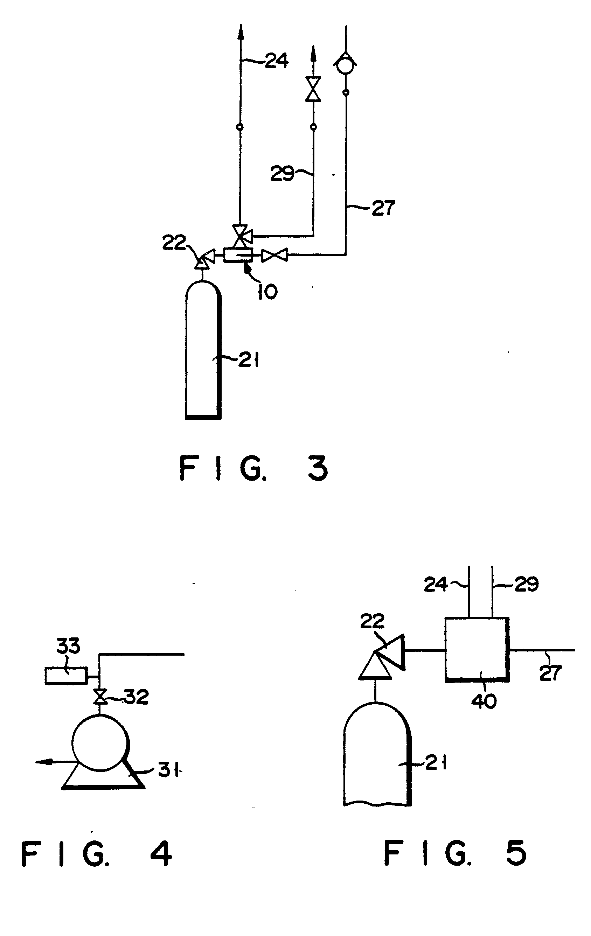

Fig. 2 is a sectional view showing a gas purge assembly according to an embodiment of the present invention, and Fig. 3 is a flowchart showing a gas purge system adopting the gas purge assembly shown in Fig. 2. In Figs. 2 and 3, gas purge assembly 10 comprises joint assembly 11, and 3 ports valve 12 and valve 13 connected to joint assembly 11. Assembly 11 has a double-pipe structure consisting of outer pipe 16 opened at its one end in cylinder connection portion 14, closed at the other end thereof, and having 3 ports valve connection pipe 15 communicating with a side portion of assembly 11, and inner pipe 17 arranged coaxially with outer pipe 16 and having one end extending in connection portion 14 and the other end communicating with purging gas supply line 27 through valve 13. A first connection port of valve 12 is connected to pipe 15, its second connection port is connected to main line 24 for flowing a gas from a cylinder (not shown), and its third connection port is connected to purging gas exhaust line 29. In Fig. 2, reference numeral 18 denotes a connection port of L-shaped valve 22 mounted on cylinder 21; 19, a packing; and 20, a clamping metal piece for connecting joint assembly 11 to connection port 18.

In a line system adopting the above gas purge assembly, a purging operation is performed as follows. That is, valve 22 in Fig. 3 is closed so that in 3 ports valve 12, the first connection port communicates with the third connection port and the second connection port is closed. In this state, valve 13 is opened to supply a dry purging gas from line 27.

The purging operation can also be performed by disposing a vacuum pump in line 29 to evacuate the line. That is, the first and third connection ports of valve 12 are caused to communicate with each other and its second connection portion and valve 13 are closed, and the vacuum pump is activated to reduce the pressure in the line to be $10^{-2}$ Torr. Then, all the ports of valve 12 are closed and valve 13 is opened to supply the purging gas. The line is purged by repeating such an operation several times. In such a method using the vacuum pump, however, an oil in the vacuum pump is reversely diffused in the line to contaminate it. That is, when the pressure in the line reaches a vapor pressure of the oil, the oil is easily, reversely diffused. Therefore, the valve of the vacuum pump must be closed before reverse diffusion occurs. For this purpose, it is preferable to use pump 31 as shown in Fig. 4. That is, pump 31 in Fig. 4 has pressure gauge 33 with a contact before valve 32 at the suction side, so that valve 32 is automatically closed when the pressure is reduced to be $10^{-2}$ Torr.

As has been described above, according to the gas purge assembly of the present invention, one end of inner pipe 17 communicating with line 27 extends to or in cylinder connection portion 14. Therefore, the purging gas such as nitrogen or argon can be supplied deep in connection portion 14 and then exhausted through outer pipe 16. For this reason, residual air in connection portion 14 can be purged without forming a dead space. In addition, since 3 ports valve 12 is directly connected to joint assembly 11, the distance between L-shaped valve 22 mounted on cylinder 21 and valve 12 is very short. Therefore, the line can be efficiently purged.

In the gas purge assembly of the present invention, 3 port valve 12 and valve 13 can be electrically or mechanically interlocked with each other so that the two valves can be simultaneously operated by a single operation. In this case, the gas purge assembly is of a form of 4 port valve 40 as shown in Fig. 5.

## Claims

1. A gas purge assembly for selectively connecting a cylinder (21), a main line (24) for supplying a gas from said cylinder (21), a purging gas supply line (27), and a purging gas exhaust line (29), comprising a joint assembly (11), a valve (13) connected between said joint assembly (11) and said purging gas supply line (27), and a 3 ports valve (12) for selectively connecting said joint assembly (11), said main line (24) and said gas purging exhaust line (29), characterized in that said joint assembly (11) has a purging gas supply path for supplying a purging gas from said purging gas supply line (27) to a cylinder connection portion (14) and a purging gas exhaust path for supplying the purging gas in said cylinder connection portion (14) to said 3 ports valve (12).

2. An assembly according to claim 1, characterized in that said joint assembly (11) has an outer pipe (16) opened at one end thereof in said cylinder connection portion (14) and having a 3 ports valve connection pipe (15) communicating with a side portion near the other end thereof, and an inner pipe (17) arranged coaxially with said outer pipe (16) and having one end extending in said cylinder connection portion (14) and the other end connected to said purging gas supply line (27) through said valve (13).

3. An assembly according to claim 2, characterized in that one end of said inner pipe (17) projects longer than one end of said outer pipe (16) by 0 to 10 mm.

EP 0 382 983 A1

F I G. 1

F I G. 2

F I G. 3

F I G. 4

F I G. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | DE-A-2 530 879 (CIBA-GEIGY AG) * claim 1; figures 1,2 * | 1 | B 01 D 53/00 |
| A | CHEMIE-INGENIEUR-TECHNIK vol. 45, no. 13, 1973, pages 873-881; K. HESS et al.: "Phosgen-Vernichtung durch thermische Umsetzung" * page 877; figure 6 * | 1 | |
| A | DE-A-2 414 330 (SIEMENS AG) * claim 1 * | | |

TECHNICAL FIELDS SEARCHED (Int. Cl.5)

B 01 D 53/00

The present search report has been drawn up for all claims

| Place of search | Date of completion of the search | Examiner |
|---|---|---|
| BERLIN | 10-08-1989 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)